Europäisches Patentamt

European Patent Office

Office européen des brevets

(11) Veröffentlichungsnummer: **0 267 311**
A1

## (12) EUROPÄISCHE PATENTANMELDUNG

(21) Anmeldenummer: 86115651.1

(22) Anmeldetag: 11.11.86

(51) Int. Cl.⁴: **B23D 49/00** , B27B 33/02

(43) Veröffentlichungstag der Anmeldung:
18.05.88 Patentblatt 88/20

(84) Benannte Vertragsstaaten:
AT BE CH DE ES FR GB GR IT LI LU NL SE

(71) Anmelder: **Black & Decker Inc.**
**Drummond Plaza Office Park 1423 Kirkwood Highway**
**Newark Delaware 19711(US)**

(72) Erfinder: **Grossmann, Horst**
**Fliederweg 10**
**D-6257 Hünfelden 1(DE)**
Erfinder: **Staas, Ernst**
**Bahnhofstrasse 10**
**D-6259 Brechen 1(DE)**

(74) Vertreter: **UEXKÜLL & STOLBERG**
**Patentanwälte**
**Beselerstrasse 4**
**D-2000 Hamburg 52(DE)**

(54) Sägeblatt für eine Säge mit zwei nebeneinander, parallel zueinander angeordneten, gegensinnig hin- und herbewegbaren Sägeblättern.

(57) Ein Sägeblatt für eine Säge mit zwei nebeneinander, parallel zueinander angeordneten, gegensinnig hin-und herbewegbaren Sägeblättern, das an einer Längsseite eine in Längsrichtung verlaufende Längsschulter (51; 52) aufweist, die den Sägezähnen (46, 47, 50) abgewandt ist, hat eine Lage und Abmessung der Längsschulter (51; 52) und eine Lage und Form der Sägezähne (46, 47, 50), durch die erreicht wird, daß sich im Sägebetrieb aus der Abstützkraft an der Längsschulter (51; 52) und den vom Werkstück auf die Sägezähne (46, 47, 50) ausgeübten Kräften ein am die Sägezähne (46, 47, 50) aufweisenden Bereich angreifendes Drehmoment in Richtung der der Längsschulter (51; 52) abgewandten Seite des Sägeblattes ergibt.

Fig. 10

## Sägeblatt für eine Säge mit zwei nebeneinander, parallel zueinander angeordneten, gegensinnig hin- und herbewegbaren Sägeblättern.

Die Erfindung bezieht sich auf ein Sägeblatt für eine Säge mit zwei nebeneinander, parallel zueinander angeordneten, gegensinnig hin-und herbewegbaren Sägeblättern, das an einer Längsseite eine Längsrichtung verlaufende Längsschulter aufweist, die den Sägezähnen abgewandt ist.

Bei einem bekannten Sägeblatt dieser Art (DE-OS 33 29 824) ist das Sägeblatt verhältnismäßig massiv ausgebildet und hat eine große Eigenstabilität, so daß es im Betrieb kaum verformt wird, obwohl alle seine Sägezähne im montierten Zustand nach außen geschränkt sind und dadurch im Betrieb auf die Sägeblätter Kräfte ausüben, die in Richtung einer Trennung der Sägeblätter im Bereich der Sägezähne wirken.

Diese Trennung der Sägeblätter im Betrieb würde tatsächlich stattfinden, wenn die Sägeblätter aus verhältnismäßig dünnem Material und daher leicht elastisch verformbar wären.

Es ist Aufgabe der Erfindung, ein Sägeblatt so auszubilden, daß es selbst dann, wenn es dünnwandig ist, im Betrieb nicht so verformt oder verlagert wird, daß ein Aufspreizen der einander benachbarten Sägeblätter stattfindet.

Zur Lösung dieser Aufgabe wird ein Sägeblatt der eingangs erwähnten Art erfindungsgemäß derart ausgestaltet, daß die Lage und Abmessung der Längsschulter und die Lage und Form der Sägezähne so gewählt sind, daß sich im Sägebetrieb aus der Abstützkraft an der Längsschulter und den vom Werkstück auf die Sägezähne ausgeübten Kräften ein am die Sägezähne aufweisenden Bereich angreifendes Drehmoment in Richtung der der Längsschulter abgewandten Seite des Sägeblattes ergibt.

Durch einen derartigen Aufbau wird erreicht, daß die beiden zusammenwirkenden Sägeblätter der Säge im Betrieb im Bereich der Sägeblätter zusammengedrückt werden, so daß kein zu bearbeitendes oder zerspantes Material zwischen die beiden Sägeblätter gelangt und diese aufspreizen kann, und zwar selbst dann nicht, wenn die Sägeblätter mit verhältnismäßig großem Spiel gelagert sind.

Hierzu können beispielsweise an dem erfindungsgemäßen Sägeblatt mindestens drei Gruppen von Sägezähnen vorgesehen sein, von denen die eine Gruppe an der die Längskante aufweisenden äußeren Seite liegende, nach außen geschränkte und über die äußere ebene Fläche des Sägeblattes vorstehende Sägezähne, die zweite Gruppe innen liegende, ungeschränkte Sägezähne, die von ihren Schneidkanten bezüglich des Sägeblattes nach außen angeschliffen sind, und die dritte Gruppe Sägezähne umfaßt, deren Zahnwurzeln weiter außen liegen als diejenigen der zweiten Gruppe von Sägezähnen und die nicht über die Sägezähne der zweiten Gruppe vorstehend nach innen geschränkt sind.

Bei einem Eingriff eines derartigen Sägeblattes mit dem Werkstück wirken dann zwar auf die erste Gruppe von Sägezähnen Kräfte in Richtung einer Trennung der beiden Sägeblätter, jedoch erzeugen die auf die zweite Gruppe von Sägezähnen wirkenden Kräfte wegen des Anschliffs der Säge zähne und die auf die dritte Gruppe von Sägezähnen wirkenden Kräfte infolge deren Schränkung Kräfte, die ein Zusammendrücken der beiden Sägeblätter bewirken, wobei dieses Zusammendrücken noch durch die Abstützkräfte an den Längsschultern des Sägeblattes unterstützt werden.

Vorzugsweise liegen dabei die Zahnwurzeln der Sägezähne der ersten und dritten Gruppe in einem Bereich des Sägeblattes, der sich weiter außen als die Längsebene durch das Sägeblatt am inneren Ende der Längsschulter befindet. Ferner ist es zweckmäßig, wenn die Breite der Längsschulter nicht größer als die halbe maximale Dicke des Sägeblattes ist, da dann die abstützende Kraft verhältnismäßig weit außen am Sägeblatt angreift und so die Erzeugung des gewünschten Drehmomentes wirksam unterstützt.

Um einen möglichst einfachen und preiswert herstellbaren Aufbau der Sägeblätter zu erreichen, kann die Längsschulter jedes Sägeblattes von einem Sägezähne tragenden Abschnitt gebildet sein, der flächig mit dem über die Längsschulter vorstehenden und Sägezähne aufweisenden Hauptabschnitt verbunden, vorzugsweise verschweißt ist. Ein derartiges Sägeblatt läßt sich somit aus zwei sehr einfach aus Bandmaterial herzustellenden Teilen, dem Abschnitt und dem Hauptabschnitt zusammensetzen, und es kann beispielsweise eine maximale Dicke von 1 mm bis 2 mm haben.

Um die im Betrieb anfallenden Sägespäne einfach aus dem Bereich der Sägezähne abführen zu können, kann bei einem derartigen Sägeblatt der Abschnitt sich von den Sägezähnen zur Längsschulter erstreckende, an beiden Enden offene Nuten aufweisen bzw. durch solche Nuten unterbrochen sein. Durch diese Nuten kann das zerspante Material sehr einfach aus dem Bereich der Sägezähne abgeführt werden.

Vorzugsweise besteht ein derartiges Sägeblatt aus gehärtetem Federstahl.

Die Erfindung wird im folgenden anhand der Figuren näher erläutert.

Figur 1 zeigt in einer Seitenansicht ein kraftgetriebenes Werkzeug in Form einer elektrisch angetriebenen, tragbaren Säge.

Figur 2 zeigt eine Draufsicht auf die Säge aus Figur 1.

Figur 3 zeigt eine Ansicht der Säge aus Figur 1 von rechts, wobei die Stützgriffe entfernt sind.

Figur 4 zeigt eine Ansicht der Säge aus Figur 1 von links.

Figur 5 zeigt eine Explosionsdarstellung der Säge aus den Figuren 1 bis 4.

Figur 6 zeigt in einer Teildarstellung, teilweise aufgebrochen und teilweise im Schnitt den den Motor das Getriebe und die Schneidblatthalterungen enthaltenden Teil der Säge gemäß Figuren 1 bis 5.

Figur 7 zeigt einen Schnitt entlang der Linie VII-VII aus Fig. 6.

Figur 8 zeigt in einer Seitenansicht das Schwert der Säge gemäß Figuren 1 bis 7.

Figur 9 zeigt in einer Teilansicht den vorderen Teil des Schwertes aus Figur 8 mit eingesetzten Sägeblättern.

Figur 10 zeigt einen Teilschnitt entlang der Linie X-X aus Figur 9.

Figur 11 zeigt vergrößert die Einzelheit aus dem Kreis 2 aus Figur 9.

Figur 12 zeigt einen Teilschnitt entlang der Linie XII-XII aus Figur 11, wobei die Sägeblätter weggelassen sind.

Figur 13 zeigt in einer Teilansicht ein anderes Schwert mit eingesetzten Sägeblättern.

Figur 14 zeigt einen Teilschnitt entlang der Linie XIV-XIV aus Figur 13.

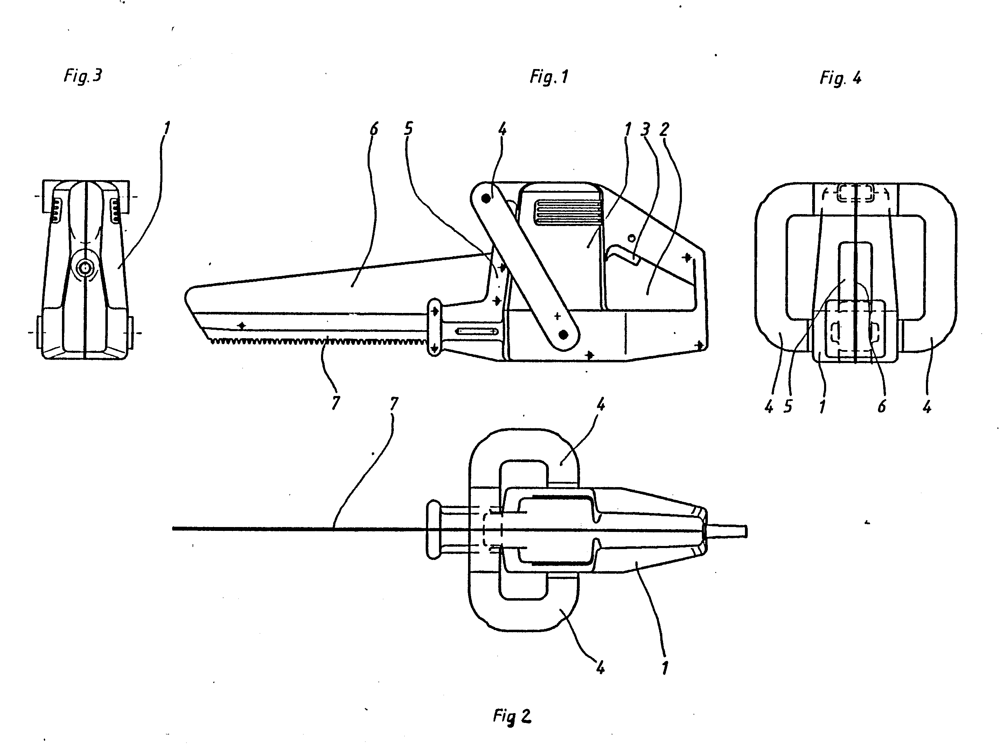

Die in den Figuren 1 bis 4 gezeigte Säge hat ein in üblicher Weise aus Halbschalen aufgebautes Gehäuse 1, in dem ein Elektromotor 10, gegebenenfalls jedoch auch ein Verbrennungsmotor, die Getriebeanordnung und die Schneidblatthalterungen 15 und 18 untergebracht sind. Am hinteren Teil des Gehäuses 1 ist eine Grifföffnung 2 ausgebildet, in die sich in üblicher Weise der von Hand zu betätigende Drücker 3 eines Ein-Aus-Schalters 3' erstreckt. Am vorderen Teil des Gehäuses 1 ist eine nur schematisch gezeigte Befestigungsanordnung 5 zur Anbringung eines Schwertes 6 vorgesehen, das die oberen Bereiche der sich gegensinnig hin-und herbewegenden Sägeblätter abstützend umgreift. Vom Gehäuse 1 erstrecken sich zwischen Öffnung 2 und Schwert 6 seitlich Stützgriffe 4.

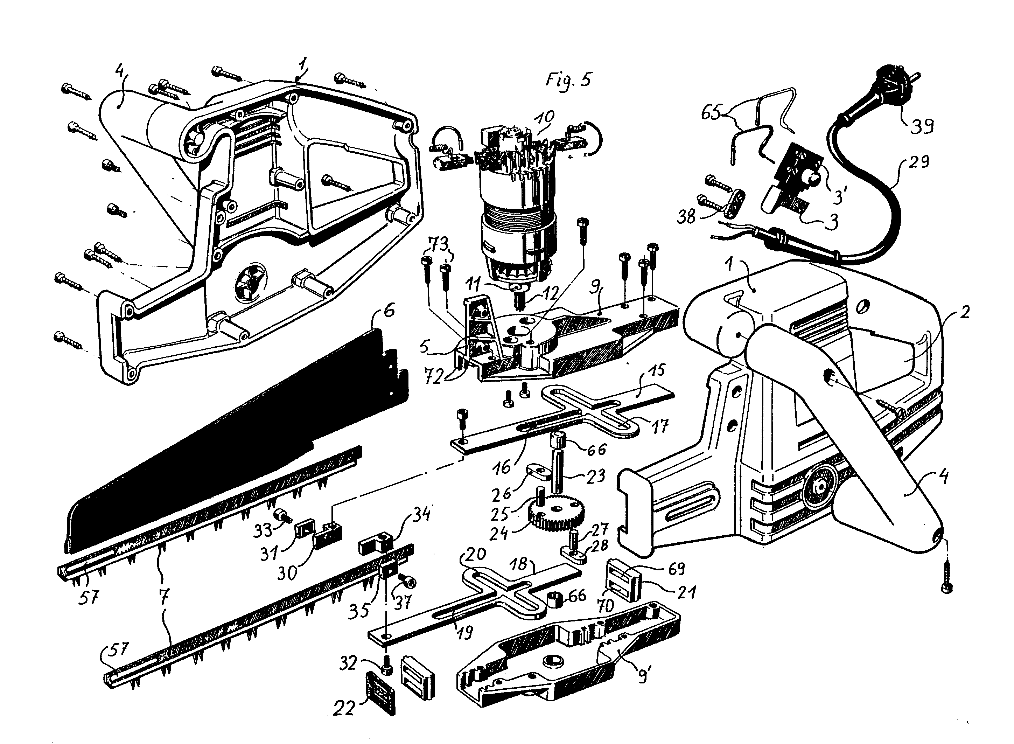

Wie Figur 5 zu entnehmen ist, wird am Griffteil des Gehäuses 1 durch eine Zugentlastungsplatte 38 ein Anschlußkabel 29 mit Stecker 39 befestigt, und zwei kurze Kabelstücke 65 mit Anschlußklemme dienen zur Herstellung einer Leitungs verbindung vom Ein-Aus-Schalter 3' zum Elektromotor 10.

Der im Gehäuse 1 gelagerte Elektromotor 10, auf dessen Ankerwelle 11 ein Lüfterrad 13 sitzt, ist in Turmbauweise aufrecht auf einem aus Metall bestehenden Teilgehäuse 9 der Getriebeanordnung montiert. Die Ankerwelle ist an ihrem äußeren Ende als Ritzel 12 ausgebildet und erstreckt sich mit ihrem äußeren Endbereich durch das Teilgehäuse 9 und ragt durch die Längsschlitze 16 bzw. 19 der oberen bzw. unteren Schneidblatthalterung 15 bzw. 18. Das freie Ende der Ankerwelle 11 ist in einem unteren aus Metall bestehenden Teilgehäuse 9' in einem Lager 14 gelagert.

Wie insbesondere Figur 5 zu entnehmen ist, haben die Schneidblatthalterungen 15, 18 Kreuzform und weisen zusätzlich zu den Längsschlitzen 16, 19 quer dazu verlaufende Führungsschlitze 17, 20 auf. Man erkennt, daß die Längsschlitze 16, 19 von den Führungsschlitzen 17, 20 durch keinen Steg getrennt sind, so daß die Ankerwelle 11 bei einer Längsverschiebung der Schneidblatthalterungen 15, 18 aus einem Bereich der Längsschlitze 16, 19 durch den Bereich der Führungsschlitze 17, 20 in den gegenüberliegenden anderen Bereich der Längsschlitze 16, 19 gelangen kann.

Parallel zur Ankerwelle 11 erstreckt sich durch das Teilgehäuse 9 im Bereich näher zur Grifföffnung 2 eine Lagerachse 23, die an beiden Enden drehbar in Lagerbuchsen 66 in den Teilgehäusen 9, 9' gelagert ist und auf der unverdrehbar ein Zahnrad 24 befestigt ist, das in kämmendem Eingriff mit dem Ritzel 12 steht.

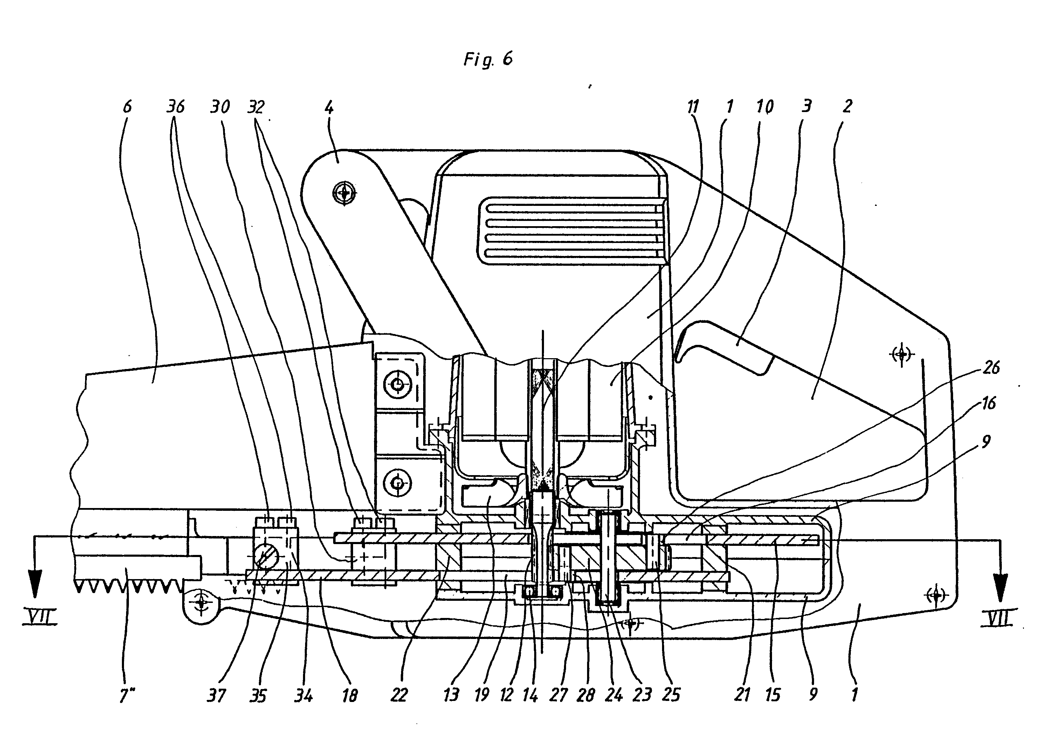

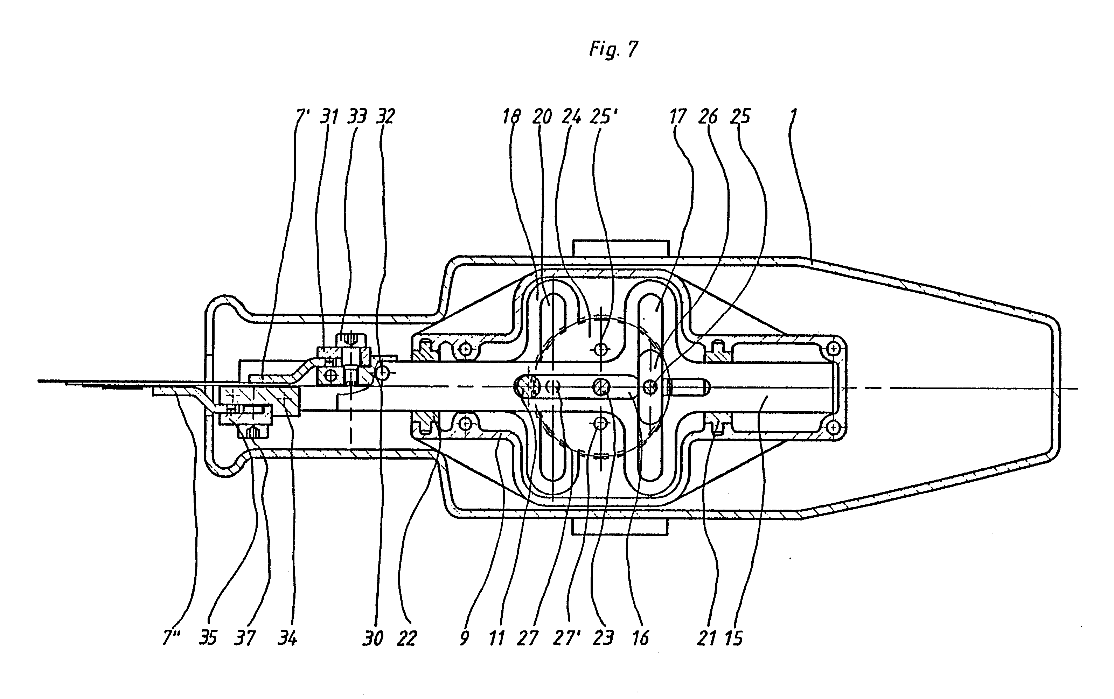

Das Zahnrad 24 befindet sich zwischen den beiden Schneidblatthalterungen 15, 18, und seine Lagerachse 23 erstreckt sich ebenso wie die Ankerwelle 11 durch die Längsschlitze 16, 19, wobei die Länge der Längsschlitze 16, 19 so gewählt ist, daß die Schneidblatthalterungen 15, 18 in der nachstehend zu beschreibenden Weise über ihren gesamten Hub in der Zeichenebene gemäß Figuren 6 und 7 in Richtung ihrer Längserstreckung hin-und herbewegbar sind. An gegenüberliegenden Seiten des Zahnrades 24 sind Exzenterstifte 25, 27 angebracht, auf deren äußeren Enden drehbar Gleitsteine 26, 28 gelagert sind. Bei normaler, für den Gebrauch üblicher und in den Figuren 5 und 6 dargestellter Lage der Säge liegt der Gleitstein 26 oberhalb des Zahnrades 24 und der Gleitstein 28 unterhalb des Zahnrades 24. Der Gleitstein 26 steht in Eingriff mit dem Führungsschlitz 17 der oberen Schneidblatthalterung 15 und der Gleitstein 28 mit dem Führungsschlitz 20 der unteren Schneidblatthalterung 18. Dadurch ist der Abstand zwischen den beiden Schneidblatthalterungen 15 und 18 lediglich etwa gleich der Dicke des Zahnrades 24.

Die Länge der Gleitsteine 26, 28 entspricht mindestens 2 mal der Breite des Längsschlitzes 16 bzw. 19 plus dem Durchmesser des zugehörigen Exzenterstiftes, um sicherzustellen, daß der Gleitstein 26, 28 in jeder Lage sicher im zugehörigen Führungsschlitz 17, 20 geführt wird und sich nicht im Übergangsbereich zum Längsschlitz 16, 19 verkantet.

Die Exzenterstifte 25 und 27 liegen auf einer Diagonalen durch die Mittelachse des Zahnrades 24 und haben den gleichen radialen Abstand von der Lagerachse 23.

Die Schneidblatthalterungen 15, 18 werden durch zwei Lagerblöcke 21, 22 abgestützt, die zwei zueinander parallel verlaufende und durch einen Steg getrennte Schlitze 69, 70 aufweisen. Die Höhe und Breite der Schlitze 69, 70 ist so gewählt, daß die länglichen, im Querschnitt im wesentlichen rechteckförmigen Schneidblatthalterungen 15, 18 mit leichtem Spiel hindurchpassen, so daß eine gute Längsführung für die Schneidblatthalterungen 15, 18 erreicht wird. Die Lagerblöcke 21, 22 sind am Vorderende bzw. am Hinterende des Teilgehäuses 9, 9' eingesetzt und durch Schwalbenschwanzführungen oder ähnliche Führungsrillen, die ein Kippen der Lagerblöcke 21, 22 verhindern, gehalten.

An den aus den Teilgehäuse 9 9' vorstehenden, in den Figuren 6 und 7 links liegenden Enden der Schneidblatthalterungen 15, 18 sind Schneidblattaufnahmen in Form von Klemmen befestigt, die aus einem mittels Schrauben 32 an den Schneidblatthalterungen 15 bzw. 18 befestigten Klemmblöcken 30 und 34 sowie gegen diese mittels jeweils einer Klemmschraube 33 bzw. 37 drückbaren Klemmstücken 31 bzw. 35 bestehen. Wie in Figur 7 angedeutet, ist zwischen dem Klemmblock 30 und dem Klemmstück 31 das abgekröpfte Ende eines Sägeblattes 7' eingeklemmt, während zwischen dem Klemmblock 34 und dem Klemmstück 35 das hintere Ende eines abgekröpften Abschnittes eines Sägeblattes 7" gehalten ist. An diesen abgekröpften Enden sind in nicht dargestellter Weise die Sägeblattschäfte befestigt, etwa durch Schweißung, und durch die Abkröpfung wird erreicht, daß die hin-und herzubewegenden Sägeblätter unmittelbar benachbart zueinander liegen.

Wird die Ankerwelle 11 vom Motor 10 angetrieben, so dreht sie mittels ihres Ritzels 12 das Zahnrad 24, wodurch die Exzenterstifte 25 und 27 eine Umlaufbewegung um die Mittelachse der Lagerachse 23 ausführen. Infolge dieser Umlaufbewegung verlagern sich die Gleitsteine 26 und 28 entsprechend und bewegen sich in den Führungsschlitzen 17 und 20 hin und her, wobei sie, wegen der Umlaufbewegung die zugehörige Schneidblatthalterung 15, 18 auch in Richtung der Längserstreckung dieser Schneidblatthalterung vor- und zurück-oder hin-und herbewegen. Geht man in diesem Zusammenhang davon aus, daß die Bewegung aus der Position gemäß Figur 7 startet, so wird bei Drehung des Zahnrades 24 die Schneidblatthalterung 15 aus ihrer in Figur 7 äußeren rechten Stellung nach links und die Schneidblatthalterung 18 aus ihrer in Figur 7 äußeren linken Stellung nach rechts verlagert, d.h. die Schneidblatthalterungen 15 und 18 werden entgegengesetzt zueinander hin-und herbewegt, wobei der Hub der beiden Schneidblatthalterungen gleich ist, weil der Abstand der zugehörigen Exzenterstifte 25, 27 von der Lagerachse 23 des Zahnrades 24 gleich ist.

Bei dieser Hin-und Herbewegung der Gleitsteine 26 und 28 in den Führungsschlitzen 17 und 20 überlaufen die Gleitsteine auch die die Führungsschlitze kreuzenden Längsschlitze 16, 19, ohne daß es zu einer Beeinträchtigung der Bewegung der Gleitsteine käme, weil diese infolge ihrer Abmessung immer sicher in den Führungsschlitzen 17 und 20 geführt werden und nicht im Kreuzungsbereich mit den Längsschlitzen 16, 19 verkanten können.

Wie in Figur 7 angedeutet, können im Zahnrad 24 zusätzliche Paare von Bohrungen 25', 27' vorhanden sein. Diese Bohrungen 25', 27' liegen näher an der Lagerachse 23 als die Exzenterstifte 25, 27, haben jedoch von der Lagerachse 23 beide den gleichen Abstand. Werden daher die Exzenterstifte 25, 27 in die Bohrungen 25' und 27' eingesetzt, so ergibt sich bei ansonsten praktisch gleichem Aufbau der Säge ein kleinerer Hub der Schneidblatthalterungen 15 und 18.

Das plattenförmige Schwert 6, dessen Aufbau später beschrieben werden wird, ist mittels der an seinem Befestigungsende vorgesehenen Bohrungen 87 an einem Vorsprung 5 befestigt, der am Teilgehäuse 9 angeformt ist und eine hintere Verstärkungsrippe 71 aufweist. Durch die senkrechte Wand des Vorsprungs 5 erstrecken sich angeformte oder aufgesetzte Schraubenbuchsen 72 für die Aufnahme von Klemmschrauben 73, die sich durch die Befestigungsbohrungen 87 des Schwertes 6 erstrecken.

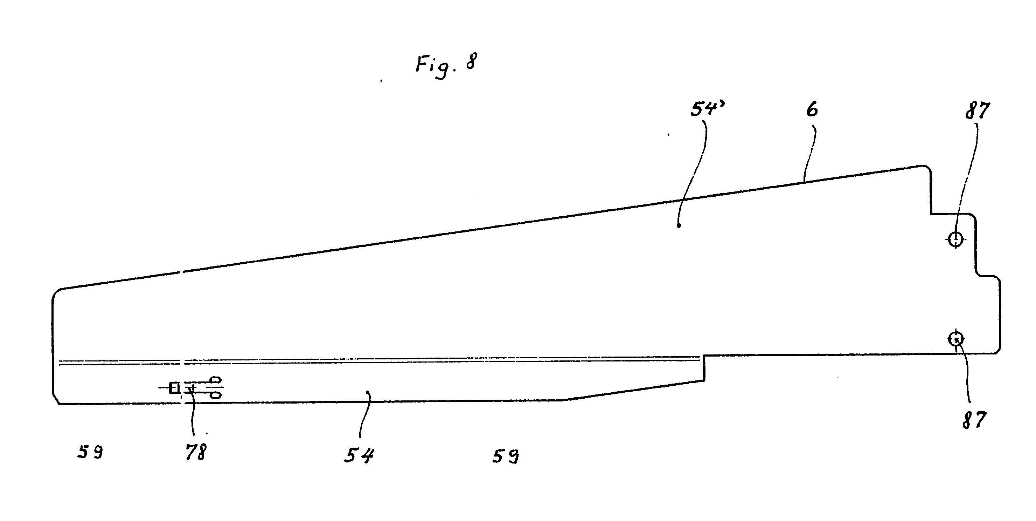

Der Aufbau des Schwertes und der Sägeblätter sowie deren Zusammenwirken ist am deutlichsten in den Figuren 8 bis 12 zu erkennen.

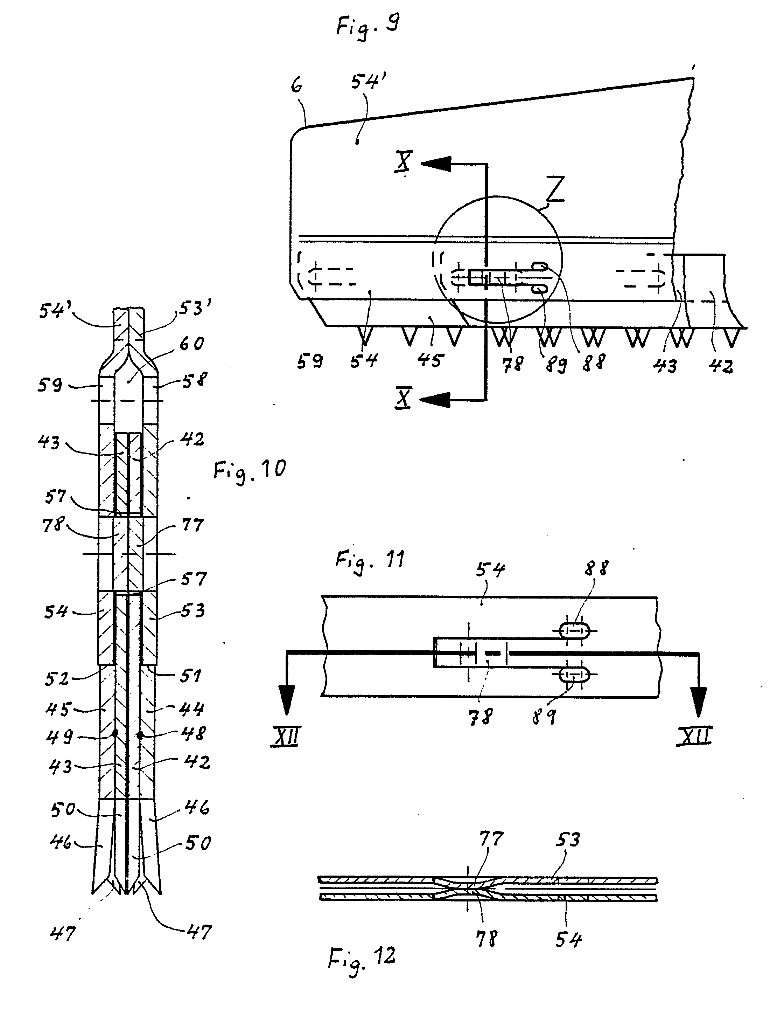

Wie dargestellt, ist das Schwert 6, das an seinem die Befestigungsbohrungen 87 aufweisenden Ende höher ist als am gegenüberliegenden Ende, aus zwei Platten 53', 54' zusammengesetzt (Figur 10), die beispielsweise durch Punktschweißung miteinander verbunden sind. Dadurch ergibt sich eine hohe Stabilität gegen Verbiegen und Verwinden. Die Platten 53', 54' können beispielsweise aus Stahl oder Aluminium bestehen und bewirken eine gute Wärmeableitung. Im unteren Bereich sind die Platten 53', 54' Trägerabschnitte 53, 54 bildend nach außen versetzt, so daß zwischen ihnen ein Zwischenraum gebildet wird, in den die oberen Bereiche der beiden Sägeblätter eingesetzt und gehalten werden können.

Wie insbesondere Figur 10 zu entnehmen ist, sind die Sägeblätter jeweils aus einem Hauptabschnitt 42, 43 und einem Abschnitt 44, 45 geringerer Höhe zusammengesetzt, die, wie bei 48 bzw. 49 angedeutet, durch Punktschweißung verbunden sind. Die obere Kante des Abschnittes 44 bzw. 45 der Einheit aus Abschnitt 44 bzw. 45 und Hauptabschnitt 42 bzw. 43 bildet eine Längsschulter 51 bzw. 52, die sich im Betrieb an der unteren Kante des Trägerabschnittes 53 bzw. 54 abstützt (Figur 10), während, wie auch Figur 10 zu entnehmen ist, die oberen Kanten der Hauptabschnitte 42, 43 unterhalb des oberen Endes der Trägerabschnitte 53, 54 enden, so daß oberhalb der Hauptabschnitte 42, 43 ein Freiraum 60 gebildet ist, die Hauptabschnitte 42, 43 also nicht an ihren oberen Kanten abgestützt werden.

An den unteren Enden der Abschnitte 44, 45 sind Sägezähne 46, 47 ausgebildet, von denen die Sägezähne 46 nach außen geschränkt sind, so daß sie über die Außenfläche des zugehörigen Abschnittes 44, 45 vorstehen und dadurch einen Einschnitt im Werkstück erzeugen, der breiter ist als die maximale Materialdicke der beiden Sägeblätter. Die an den Abschnitten 44 und 45 vorhandenen Sägezähne 47 sind nach innen geschränkt sind, so daß sie sich bis in den Bereich unterhalb des zugehörigen Hauptabschnittes 42, 43 erstrecken. An diesen Hauptabschnitten 42, 43 befinden sich ungeschränkte Sägezähne 50, die jedoch von ihren Außenkanten schräg nach außen angeschliffen sind.

Die Sägeblätter haben parallel zu den Längsschultern 51, 52 verlaufende Längsschlitze 57 (Figur 5), deren Endbereiche gestrichelt in Figur 9 angedeutet sind. In diese Längsschlitze erstrecken sich Blattfederstreifen 77, 78, die in noch zu beschreibender Weise am Schwert 6 ausgebildet sind. Durch diese Blattfederstreifen 77, 78 werden die Sägeblätter im vorderen Bereich der Trägerabschnitte 53, 54 zwischen diesen in Längsrichtung hin-und herbewegbar geführt, und die Blattfederstreifen 77, 78 verhindern das Lösen der Sägeblätter aus dem Schwert 6, wobei die Sägeblätter mit ihren hinteren Enden in der vorstehend beschriebenen Weise an den Schneidblatthalterungen 15, 18 befestigt sind.

Im Betrieb kommen die Sägezähne 46, 47, 50 der Sägeblätter in Eingriff mit einem Werkstück, wobei die Verlagerung der Sägeblätter in das Schwert 6 hinein durch die Längsschultern 51, 52 verhindert wird, indem die Trägerabschnitte 53, 54 auf diese Längsschulter eine abstützende Kraft ausüben.

Diese nach unten auf die Längsschultern 51, 52 ausgeübten Kräfte bewirken, insbesondere wenn, wie dargestellt, der Abschnitt 44, 45 und der Hauptabschnitt 42, 43 gleiche Dicke haben oder gar die Abschnitte 44, 45 geringere Dicke als die Hauptabschnitte 42, 43 aufweisen, auch ein Drehmoment, das die Sägeblätter in ihrem unteren, die Sägezähne tragenden Bereich zusammendrückt, so daß die ungeschränkten Sägezähne gegeneinander gedrückt werden. Gleichzeitig wirkt auf die nach außen geschränkten Sägezähne 46 infolge des Eingriffs mit dem Werkstück eine nach oben und auch nach außen gerichtete Kraft, zumal die Sägezähne 46 auch noch von oben nach unten - schräg nach außen angeschliffen sind. Diese Kraft wirkt in Richtung des Auseinanderdrückens der Sägeblätter im Bereich der Sägezähne 50. Die Sägezähne 47 sind jedoch nach innen geschränkt und haben schräg von oben nach unten und innen verlaufende, angeschliffene Kanten, so daß an ihnen eine nach oben und innen wirkende Kraft auftritt, die der Trennkraft für die Sägeblätter durch die Sägezähne 46 entgegenwirkt. Eine entsprechende Kraft greift auch an den Sägezähnen 50 an, die infolge ihres Anschliffes von innen schräg nach außen nach oben und innen wirkt.

Insgesamt können die Sägezähne 46, 47, 50 in ihrer Form und Ausrichtung so abgestimmt werden, daß auf die beiden Sägeblätter im Bereich der Sägezähne 50 durch die an den Sägezähnen 46, 47, 50 angreifenden Kräfte und durch die auf die Längsschultern 51, 52 wirkenden Abstützkräfte ein Drehmoment erzeugt wird, das die Sägeblätter in diesem Bereich zusammendrückt, so daß die Sägezähne 50 und der an sie anschließende Bereich der Hauptabschnitte 42 und 43 im Betrieb auch ohne Einhaltung enger Toleranzen fest zusammengedrückt wird und daher nicht die Gefahr besteht, daß die Sägeblätter durch zwischen sie eindringendes Material aufgespreizt werden.

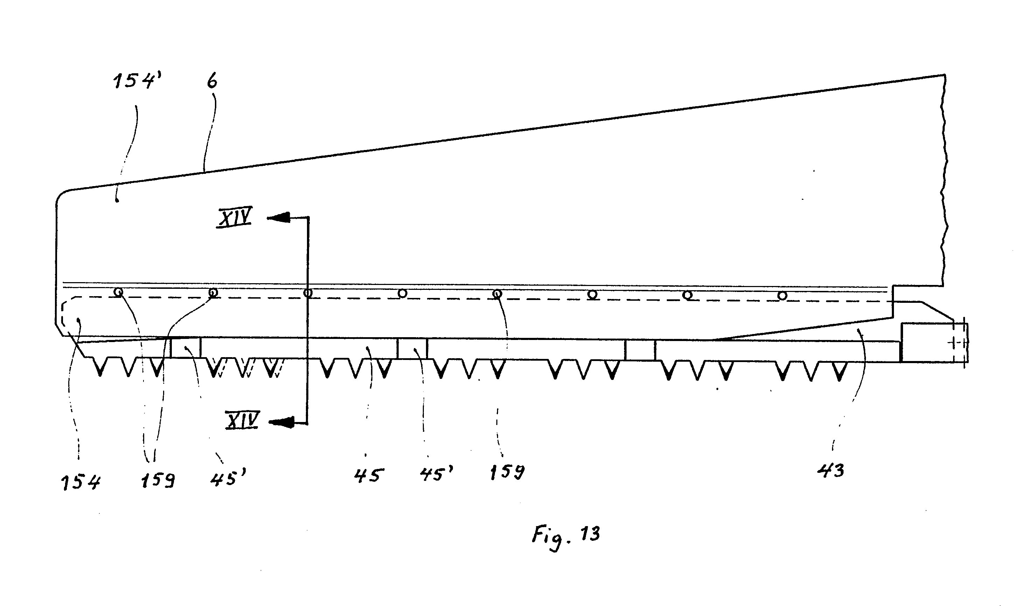

Wie bereits erwähnt, werden die Sägeblätter mittels der Blattfederstreifen 77, 78 zwischen den Trägerabschnitten 53, 54 des Schwertes 6 gehalten. Diese Blattfederstreifen sind durch Stanzen an einandergegenüberliegenden Stellen aus den Wänden der Trägerabschnitte 53, 54 herausgeschnitten, so daß sie nur mit ihrem in den Figuren 9, 11 und 12 rechten Ende noch fest mit der Wand des jeweiligen Trägerabschnittes 53, 54 verbunden sind. Benachbart zu dieser Verbindung sind zur Verringerung der Kerbwirkung Öffnungen 98 und 89 in den Trägerabschnitten 53, 54 vorhanden. Beim Stanzen werden die Blattfederstreifen 77, 78 so verformt, daß sie sich mit ihren Mittelbereichen nach innen wölben, wie dies in Figur 12 zu erkennen ist, so daß sie sich gegenseitig abstützen. Sie können daher durch das Einführen der Hauptabschnitte 42, 43 der Sägeblätter zwischen die Trägerabschnitte 53, 54 auseinandergedrückt werden, und die Sägeblätter können so positioniert werden, daß ihre Schlitze 57 sich im Bereich der Blattfederstreifen 77, 78 befinden, so daß diese in die Schlitze 57 einschnappen und so die Sägeblätter gegen Verlagerungen in senkrechter Richtung (Figur 10) halten.

Da die Blattfederstreifen 77, 78 durch Einschneiden, also ohne Materialentfernung hergestellt werden, stützen sich ihre oberen und unteren Kanten im Betrieb an den entstandenen Begrenzungskanten in den Wänden der Trägerabschnitte 53, 54 ab, so daß die Blattfederstreifen 77, 78 sich im Betrieb nicht in senkrechter Richtung (Figur 10) verlagern können, also eine hohe Stabilität für die Halterung der Sägeblätter gegeben ist.

Zum Entfernen der Sägeblätter braucht der Benutzer diese von den Schneidblatthalterungen 15, 18 zu lösen und dann die Sägeblätter so zu verschieben, daß die Blattfederstreifen 77, 78 sich elastisch nach außen verlagernd aus den Schlitzen 57 in den Hauptabschnitten 42, 43 der Sägeblätter herausgedrückt werden. Die Sägeblätter können dann zwischen den Trägerabschnitten 43, 54 herausbewegt werden.

Wie in den Figuren 8 bis 10 zu erkennen ist, sind in den Trägerabschnitten 53, 54 oberhalb der oberen Kanten der Hauptabschnitte 42, 43 der Sägeblätter Durchgangsbohrungen 58, 59 vorhanden, die den Freiraum 60 (Figur 10) mit der Außenseite der Trägerabschnitte 53, 54 verbinden. Diese Bohrungen ermöglichen den Austritt von zerspantem Material, das im Betrieb zwischen die Trägerabschnitte 53, 54 gelangen kann und bei einer Ansammlung im Freiraum 60 zu Schwierigkeiten im Betrieb führen könnte.

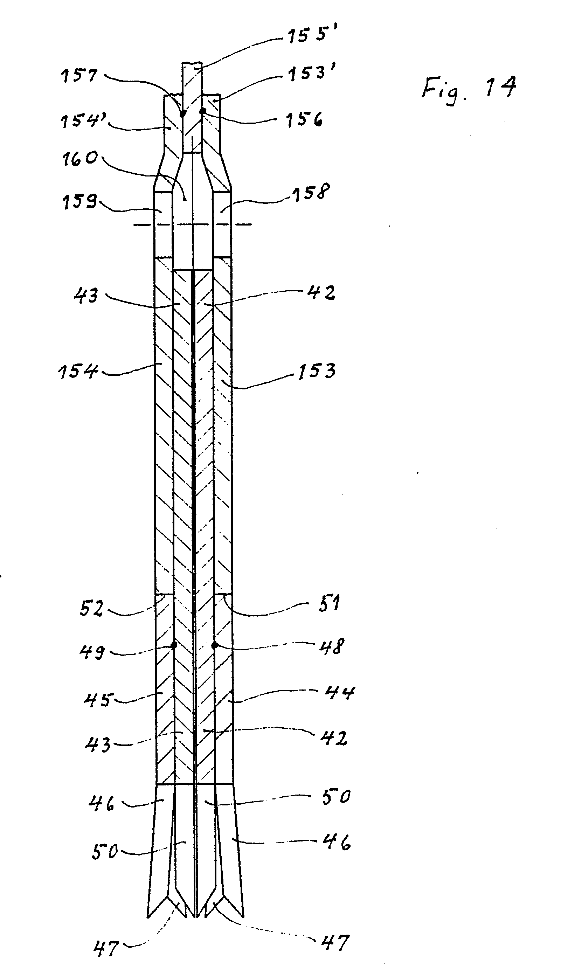

In den Figuren 13 und 14 ist ein gegenüber den Figuren 8 bis 12 etwas abgewandeltes Schwert dargestellt, in das auch etwas abgewandelte Sägeblätter eingesetzt sind. Gleiche Teile wie in den Figurn 8 bis 12 sind in den Figuren 13 und 14 mit gleichen Bezugszeichen und entsprechende Teile im allgemeinen mit um 100 erhöhten Bezugszeichen bezeichnet.

Es sei erwähnt, daß in Figur 13 die Blattfederzunge für die Halterung des benachbarten Sägeblattes nicht gezeigt wurde. In diesem Zusammenhang ist zu bemerken, daß selbstverständlich auch eine andere Art der Befestigung des Sägeblattes im vorderen Bereich des Schwertes gewählt werden könnte. Dort könnte beispielsweise ein sich durch die Trägerabschnitte 153, 154 und den zwischen ihnen befindlichen Aufnahmeraum erstreckender Niet vorhanden sein, und die Sägeblätter könnten in ihren Hauptabschnitten 42, 43 einen nach vorn offenen Schlitz aufweisen, so daß ein Einführen der Sägeblätter in den Niet möglich wäre.

Das Schwert gemäß Figuren 13 und 14 ist aus drei Teilplatten 153', 155' und 154' aufgebaut, die, wie bei 156 und 157 angedeutet, durch Punktschweißung verbunden sind. Die mittlere Platte 155' erstreckt sich nicht bis zum unteren Ende des Schwertes, sondern endet dort, wo die beiden äußeren Platten 153' und 154' die Trägerabschnitte 153, 154 bildend nach außen versetzt sind, so daß zwischen sie die Hauptabschnitte 42, 43 der Sägeblätter eingesetzt werden können.

Der Freiraum 160 oberhalb der Hauptabschnitte 42, 43 ist wiederum durch Querbohrungen 158, 159 mit der Außenseite der Trägerabschnitte 153, 154 verbunden, so daß durch diese Bohrungen zerspantes Material aus dem Freiraum 160 austreten kann.

Um dieses zerspante Material möglichst gut von den Sägezähnen abführen zu können, können in den Abschnitten 44 und 45 sich von den Sägezähnen bis zu den Längsschultern 51, 52 erstreckende Nuten 45' (Figur 13) vorhanden sein, durch die das zerspante Material nach oben abgeführt werden kann. Diese Nuten können beispielsweise dadurch ausgebildet werden, daß die Abschnitte 44, 45 in Form von Teilabschnitten mit den Hauptabschnitten 42, 43 verbunden sind, so daß zwischen den Teilabschnitten die Nuten 45' gebildet werden.

## Ansprüche

1. Sägeblatt für eine Säge mit zwei nebeneinander, parallel zueinander angeordneten, gegensinnig hin-und herbewegbaren Sägeblättern (7), das an einer Längsseite eine in Längsrichtung verlaufende Längsschulter (51; 52) aufweist, die den Sägezähnen (46, 47, 50) abgewandt ist, **dadurch gekennzeichnet,** daß die Lage und Abmessung der Längsschulter (51; 52) und die Lage und Form der Sägezähne (46, 47, 50) so gewählt sind, daß sich im Sägebetrieb aus der Abstützkraft an der Längsschulter (51; 52) und den vom Werkstück auf die Sägezähne (46, 47, 50) ausgeübten Kräften ein am die Sägezähne (46, 47, 50) aufweisenden Bereich angreifendes Drehmoment in Richtung der der Längsschulter (51; 52) abgewandten Seite des Sägeblattes (7) ergibt.

2. Sägeblatt für eine Säge mit zwei nebeneinander, parallel zueinander angeordneten, gegensinnig hin-und herbewegbaren Sägeblättern (7), das an einer Längsseite eine in Längsrichtung verlaufende Längsschulter (51; 52) aufweist, die den Sägezähnen (46, 47, 50) abgewandt ist, insbesondere nach Anspruch 1, **dadurch gekennzeichnet,** daß mindestens drei Gruppen von Sägezähnen (46, 47, 50) vorgesehen sind, von denen die eine Gruppe an der die Längskante (51; 52) aufweisenden äußeren Seite liegende, nach außen geschränkte und über die äußere ebene Fläche des Sägeblattes (7) vorstehende Sägezähne (46), die zweite Gruppe innen liegende, ungeschränkte Sägezähne (50), die von ihren Schneidkanten bezüglich des Sägeblattes (7) nach außen angeschliffen sind, und die dritte Gruppe Sägezähne (47) umfaßt, deren Zahnwurzeln weiter außen liegen als diejenigen der zweiten Gruppe von Sägezähnen (50) und die nicht über die Sägezähne (50) der zweiten Gruppe vorstehend nach innen geschränkt sind.

3. Sägeblatt nach Anspruch 2, **dadurch gekennzeichnet,** daß die Zahnwurzeln der Sägezähne (46, 47) der ersten und dritten Gruppe in einem Bereich des Sägeblattes (7) liegen, der sich weiter außen als die Längsebene durch das Sägeblatt (7) am inneren Ende der Längsschulter (51; 52) befindet.

4. Sägeblatt nach einem der Ansprüche 1 bis 3, **dadurch gekennzeichnet,** daß die Breite der Längsschulter (51; 52) nicht größer als die halbe maximale Dicke des Sägeblattes (7) ist.

5. Sägeblatt nach einem der Ansprüche 1 bis 4, **dadurch gekennzeichnet,** daß die Längsschulter (51; 52) des Sägeblatts (7) von einem Sägezähne (46, 47) tragenden Abschnitt (44; 45) gebildet ist, der flächig mit dem über die Längsschulter (51; 52) vorstehenden und Sägezähne (50) aufweisenden Hauptabschnitt (42; 43) verbunden ist.

6. Sägeblatt nach Anspruch 5, **dadurch gekennzeichnet,** daß der Abschnitt (44; 45) und der Hauptabschnitt (42; 43) miteinander verschweißt sind.

7. Sägeblatt nach Anspruch 5 oder 6, **dadurch gekennzeichnet,** daß der Abschnitt (44; 45) sich von den Sägezähnen (46, 47) zur Längsschulter (51; 52) erstreckende, an beiden Enden offene Nuten (45') aufweist bzw. durch diese Nuten (45') unterbrochen ist.

8. Sägeblatt nach einem der Ansprüche 1 bis 7, **gekennzeichnet** durch die Ausbildung aus gehärtetem Federstahl.

9. Sägeblatt nach einem der Ansprüche 1 bis 8, **gekennzeichnet** durch eine maximale Dicke von 1 mm bis 2 mm.

Fig.3

Fig.1

Fig. 4

0 267 311

Fig 2

Fig. 5

Fig. 6

Fig. 7

Fig. 8

54'  6  87

54

59  78  54  59

87

0 267 311

Fig. 9

Fig. 10

Fig. 11

Fig. 12

154'  6

XIV ◀

0 267 311

XIV ◀

154  159  45'  45  45'  159  43

Fig. 13

0 267 311

Fig. 14

# EUROPÄISCHER RECHERCHENBERICHT

**Europäisches Patentamt**

Nummer der Anmeldung

EP 86 11 5651

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-1 789 804 (BROILLET) <br> * Seite 1, Zeile 86 - Seite 2, Zeile 36; Figur 4 * | 1,2 | B 23 D 49/00 <br> B 27 B 33/02 |
| | --- | | |
| A | US-A-2 840 125 (KIRKSEY) <br> * Spalte 4; Anspruch 1; Figuren 14-21 * | 1,2,7 | |
| | --- | | |
| D,A | DE-A-3 329 824 (FRANK et al.) <br> * Ansprüche 1-3; Figur 2 * | 1 | |
| | --- | | |
| A | US-A-2 784 751 (ALEXANDER) <br> * Spalte 2, Zeilen 18-25; Figur 5 * | 6 | |
| | ----- | | |

|  | RECHERCHIERTE SACHGEBIETE (Int. Cl.4) |
|---|---|
| | B 23 D 49/00 <br> B 23 D 61/12 <br> B 27 B 11/00 <br> B 27 B 19/00 <br> B 27 B 33/02 |

Der vorliegende Recherchenbericht wurde für alle Patentansprüche erstellt.

| Recherchenort | Abschlußdatum der Recherche | Prüfer |
|---|---|---|
| BERLIN | 16-06-1987 | MARTIN A E W |

EPA Form 1503 03 82